(19) **Europäisches Patentamt European Patent Office Office européen des brevets**

(11) **EP 3 710 534 B1**

(12) **EUROPEAN PATENT SPECIFICATION**

(45) Date of publication and mention
of the grant of the patent:
**07.06.2023 Bulletin 2023/23**

(21) Application number: **18803639.6**

(22) Date of filing: **13.11.2018**

(51) International Patent Classification (IPC):
*C08L 95/00* (2006.01)     *C08L 97/00* (2006.01)

(52) Cooperative Patent Classification (CPC):
(C-Sets available)
**C08L 95/00**                    (Cont.)

(86) International application number:
**PCT/EP2018/081097**

(87) International publication number:
**WO 2019/092278 (16.05.2019 Gazette 2019/20)**

(54) **LIGNIN-BASED BIO-ASPHALT**

LIGNINBASIERTER BIO-ASPHALT

BIO-ASPHALTE À BASE DE LIGNINE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **13.11.2017 EP 17201291**

(43) Date of publication of application:
**23.09.2020 Bulletin 2020/39**

(73) Proprietors:
• **Stichting Wageningen Research
6708 PB Wageningen (NL)**
• **Asfalt Kennis Centrum B.V.
5928 LX Venlo (NL)**

(72) Inventors:
• **LANDA, Paul Adrianus
4851 TL Ulvenhout (NL)**
• **GOSSELINK, Richard Johannes Antonius
7021 ER Zelhem (NL)**

(74) Representative: **EP&C
P.O. Box 3241
2280 GE Rijswijk (NL)**

(56) References cited:
**WO-A1-87/02376     WO-A1-99/42526**

• **Klaus Niemelä, Tarja Tamminen, Taina Ohra-aho:
"Characterisation of blackliquor constituents",
FP0901 Workshop, Wien, Austria , 4 February
2010 (2010-02-04), XP002780261, Retrieved from
the Internet:
URL:http://web.abo.fi/fak/tkf/spk/costfp09
01/Vienna_2010/2_07_Vienna_Niemela.pdf
[retrieved on 2018-04-19]**

Remarks:
The file contains technical information submitted after
the application was filed and not included in this
specification

(52) Cooperative Patent Classification (CPC): (Cont.)

C-Sets
**C08L 95/00, C08L 97/005**

## Description

### Technical field

The present invention relates to the field of asphalt binders having a low bitumen content, and methods for preparing said. These asphalt binders are useful for preparing asphalt compositions, e.g. for asphalt road construction, in particular stone mastic asphalt or porous asphalt road construction.

### Background of the invention

Asphalt is generally prepared by mixing aggregate and filler materials by a bitumen based binder.

Bitumen is derived from the heaviest portion from the oil distillation process. It may have different properties due to the different origins of the oil as well as due to the different distillation processes employed. However, bitumen can be characterized by the presence of four classes of substances each having different molecular weight ranges: saturates, aromatics, resins, and asphaltenes.

Since bitumen is obtained from fossil sources, there is a desire to (partly) replace bitumen by alternatives with a higher sustainability in terms of decreased $CO_2$-emission and favourable environmental impact.

Lignin from biomass is known as a potential substitute for part of the bitumen in asphalt and other applications. Lignin acts in plants as a binder to provide strength and rigidity to the plants and has structural similarities to the aromatic and asphaltene fractions of bitumen, for example in that both contain similar unsaturated aromatic rings joined by alkyl chains. Furthermore, lignin also has adhesive and UV stability properties.

Lignin is one of the most abundant natural polymers (next to cellulose and hemi cellulose) present in plant material. It is generated as a side stream in the production process for pulp and paper and as a non-fermentable side stream in the production of cellulosic bioethanol.

For the above reasons, asphalt binder compositions have already been described which contain bitumen and lignin. However, processing of the asphalt compositions that are obtained with such binder compositions requires high temperatures. Furthermore, the obtained asphalt has a limited strength.

Therefore, it is an objective of the present invention to overcome one or more disadvantages as described above, and particularly to provide for an improved asphalt binder.

### Summary of the invention

The present disclosure provides for a composition comprising

- bitumen;
- optionally vegetable oil or derivative thereof; and
- lignin preparation, wherein the lignin preparation is characterized by

    - a lignin purity of 60-100 wt.% with respect to the weight of the lignin preparation; and
    - a lignin average molecular weight of 1000-5000 g/mol.

The composition may be an asphalt binder composition or asphalt composition. Accordingly, the present disclosure also relates to a paving or roofing comprising the composition of the disclosure. Further, the present disclosure relates to a method of preparing an asphalt composition, comprising mixing bitumen with filler material, adding lignin preparation and vegetable oil to the mixture obtained, preferably wherein the lignin preparation and the vegetable oil are added (substantially) simultaneously.

The technology of the present disclosure leads to the partial, but significant, substitution of bitumen, a fossil derived distillation fraction of crude oil. The present disclosure will therefore allow for a significantly lower use of fossil bitumen, and will increase independency of the fossil industry and will save energy and improve $CO_2$ footprint of the manufacturing process for asphalt.

In the present disclosure, a specific lignin preparation is used in combination with a (boiled) vegetable oil or derivative thereof to substitute preferably more than 50% of the bitumen in asphalt binders. It has been found that a lignin preparation with the specific characteristics according to the present disclosure provides for an improved asphalt strength, both under dry and wet conditions.

The lignin is preferably applied without prior modification and typically in a 50% substitution level to bitumen. Addition of the vegetable oil is beneficial to reach improved compatibility (e.g. better mixing) and lower processing temperatures at which no observable crosslinking occurs.

**Detailed description of the invention**

In a first aspect, the present disclosure relates to a composition comprising

- bitumen;
- optionally vegetable oil or derivative thereof; and
- lignin preparation, wherein the lignin preparation is characterized by

  - a lignin purity of at least 60 wt. %, preferably at least, 61, 62, 63, 64, 65, 66, 67, 68, 69, 70, 71, 72, 73, 74, 75, 76, 77, 78, 79, 80, 85, 90 or 70-100 wt.% with respect to the weight of the lignin preparation; and
  - a lignin average molecular weight of at least 1000, preferably at least 1100, 1200, 1300, 1400, 1500, 1600, 1700, 1800, 1900, 2000, 2100,2200, 2300, 2400,2500 g/mol and at most 5000, preferably at most 4000,3000, 2500 g/mol, most preferably 1000-5000 g/mol.

The composition can be used as or comprised in an asphalt (binder) composition. Accordingly, the present disclosure further relates to a paving comprising the composition as described herein, as well as a roofing comprising the composition as described herein.

As mentioned, a first preferred ingredient of the composition is bitumen, which is known for different applications, the most important being as aggregate blend for road paving. Bitumen is derived from the heaviest portion from the oil distillation process. It may have different properties due to the different origins of the oil as well as due to the different distillation processes employed. However, bitumen can be characterized by the presence of four classes of substances each having different molecular weight ranges: saturates, aromatics, resins, and asphaltenes. The bitumen in the present composition may be selected from virgin bitumen, recycled bitumen, or mixtures thereof. The bitumen may be present in an amount of at least 10, 15, 20, 25, 30, 40, 50, 60, 70, 80, 90, 100 wt.% and/or at most 300, 250, 200, 180, 150, 125, 110 wt.%, preferably 80-120 wt.% with respect to the weight of the lignin preparation.

The composition further comprises (boiled) vegetable oil, or non-fossil derived oil, preferably chosen from linseed oil, soybean oil, sunflower oil, and safflower oil. Preferably, the vegetable oil has a dynamic viscosity of 0.01-1600 Pa.s at 20°C or 0.01-1000, 0.03-500, or 0.05-250, preferably 0.1-100, 0.2-50, 0.3-20, 0.4-10, 0.5-5 or 0.5-2 Pa.s at 20°C. Kinematic viscosity may be determined by using an Ubbelohde viscometer according to ASTM D 445 or its equivalent BS 188. The dynamic viscosity can be calculated from the kinematic viscosity data by multiplying the latter by the density (see e.g. Gallagher et al; Am. Oil. Chem. Soc., 54, 68-70, 1977).

A higher dynamic viscosity of the vegetable oil can be achieved through boiling, thereby obtaining a boiled vegetable oil with increased viscosity as compared to vegetable oil that has not been boiled. Here, boiling may refer to oxidative polymerization of the vegetable oil so as to obtain the desired dynamic viscosity. Boiled linseed oil is sometimes referred to as lynpave oil.

The vegetable oil may be a derivative of a natural vegetable oil (preferably non-fossil based) such as a polyol ester thereof or vegetable oil based alkyd. Such alkyds are typically prepared by reacting a vegetable oil or fatty acid, with polyhydric alcohols like (di)pentaerythritol, glycerol, sorbitol, xylitol and the like, and a di -or triacid (anhydride); e.g. succinic acid, furandicarboxylic acid or phthalic acid (anhydride). Alternatively and/or additionally, the vegetable oil may be modified. Preferably, the vegetable oil is selected from the group consisting of linseed oil, soybean oil, sunflower oil, and safflower oil, and/or in the most preferred embodiment the vegetable oil is unsaturated.

Alternatively and/or additionally to the above-mentioned derivatives of vegetable oil, a drying fatty acid, semi-drying fatty acid or mixture thereof may be used in the present disclosure as an vegetable oil derivative, such as ethylenically unsaturated conjugated or non-conjugated C12 to C24 carboxylic acids, for example oleic, ricinoleic, linoleic, linolenic, licanoic acid and eleostearic acids or mixture thereof, typically used in the form of mixtures of fatty acids derived from natural or synthetic oils. Examples of suitable natural oils include but are not limited to safflower, tall oil, calendula oil, rapeseed oil, peanut oil, soya bean oil, tung oil, linseed oil, sardine oil, herring oil, sesame oil, olive oil, dehydrated castor oil, tallow oil, sunflower oil, cottonseed oil and mixtures thereof.

The vegetable oil or derivative thereof may be present in at least 0, 0.1, 0.5, 0.6, 0.7, 0.8, 0.9, 1.0, 1.1, 1.2, 1.5, 1.6, 1.7, 1.8, 1.9, 2, 2.1, 2.2, 2.3, 2.4, 2.5, 2.6, 2.7, 2.8, 2.9, 3.0 wt.%, and/or at most 10, 9, 8, 7, 5, 4, 3, 2 wt.%, preferably 3-10 wt.%, with respect to the weight of the bitumen.

A third ingredient of the composition is the lignin preparation, preferably in a dried powder form or having a water content of less than 25, 20, 15, 10,or 5 wt.%. Preferably, the lignin preparation is present in at least 10, 15, 20, 25, 30, 40, 50, 60, 70, 80, 90, 100, 110, 120, 130, 140, 150 wt.% and/or at most 200, 180, 150 wt%, preferably 80-120 wt.% with respect to the weight of the bitumen.

Lignin is one of the most abundant natural polymers (next to cellulose and hemi cellulose) present in plant material. It is generated as a side stream in the production process for pulp and paper and as a non-fermentable side stream in the production of bioethanol.

As mentioned herein before, the lignin preparation according to the present disclosure has a specified purity and/or a lower impurity content, e.g. a lower content in carbohydrates, proteins, and/or ash. It was particularly found that a higher purity of the lignin preparation leads to an improved binding capacity of the lignin preparation, and accordingly, when applied in an asphalt (binder) composition, an improved asphalt strength, both under dry and wet conditions. Without being bound by any theory, it appears that the presence of too much impurities, such as carbohydrates, proteins, and/or ash, impedes the binding function of the lignin preparation.

The lignin purity and/or the impurity content may for example be determined by a two-step sulfuric acid hydrolysis of the lignin preparation starting with 12 M $H_2SO_4$ at 30°C for 1 h followed by 1 M $H_2SO_4$ at 100°C for 3 h. The hydrolysate can then be neutralized by calcium carbonate until acidic pH as indicated by bromophenol blue. Resulting monosaccharides are separated and quantified for example by HPAEC-PAD on a Dionex CarboPac PA1 column and precolumn, preferably under the following conditions: sodium hydroxide/water gradient at 35°C; flow rate 1 ml min-1. Postcolumn addition of 500 mM NaOH at a flow rate of 0.2 ml min-1 may be used for detection. Ash in lignin can be determined after complete combustion at 800°C during 4-8 h. Methods were derived from TAPPI standards.

Further, the lignin has a preferred average molecular weight. Average molecular weight of the lignin may be determined as follows. Lignin samples of 1 mg/ml may be dissolved in 0.5 M NaOH and can be injected into TSKgel guardcolumn PWxl, preferably with Column Size: 6.0 mm l.D. x 4cm, Particle Size: 12 um and two serial connected TSKgel GMPWxl, Column Size: 7.8 mm l.D. x 30cm, Particle Size: 13 um. Samples can then be eluted with the same solvent. Preferred conditions: flow 1 ml min-1, column temperature 25°C, and detection at 280 nm. Standards for calibration of the molar mass distribution: sodiumpolystyrene sulfonates (Mw range: 891 to 976 000 Da) and phenol.

The lignin preparation may be further characterized by

- a softening temperature of at least 90, 92, 93, 94, 95, 96, 97 °C, preferably at least 98 or 99 °C;
- a carbohydrate content of at most 20, 19, 18, 17, 16, 15, 14, 13, 12, 11 wt.%, preferably at most 10, 9, 8, 7, 6, 5, 4, 3, 2, or 1 wt.%, with respect to the weight of the lignin preparation;
- a protein content of at most 10, 9, 8, 7, 6 preferably at most 5, 4, 3, 2, 1 wt.%, with respect to the weight of the lignin preparation;
- an ash content of at most 12, 11, 10, 9, 8, 7, 6 wt.%, preferably at most 5, 4, 3, 2, 1 wt.%, with respect to the weight of the lignin preparation; and/or
- a phenolic hydroxyl group content of at least 0.5, 1, 2, 3, 4, 5, 6, 7, 8, 9, or 10 mmol per gram of the lignin preparation.

Softening temperature may for example be determined as follows. 20 mg of dried lignin may be put in hermetically closed stainless steel cups. In a DSC Pyris Perkin Elmer, the samples can be heated from -40°C to 190°C with 10°C/min. After annealing with 100°C/min to -40°C, the samples can be heated to 190°C with 10°C/min. The Tg can then be measured from the second heating thermogram.

Furthermore, the phenolic and aliphatic hydroxyl group content can be measured as follows. In a 1-ml vial, 30 mg of lignin was mixed with 100 ml N,N-Dimethylformamide (DMF)/pyridine (1:1 v/v) and 100 ml internal standard solution containing 15 mg ml-1 cyclohexanol (internal standard) and 2.5 mg ml-1 chromium(lll) acetylacetonate in pyridine. This suspension can then be stirred for 4-16 h at room temperature. Derivatization (100 ml) reagent (2-chloro-4,4,5,5-tetramethyl-1,3,2-dioxaphopholane) may then be mixed with 400 ml of CDCl3 prior to addition to the lignin suspension. After mixing, the mixture can be analyzed by NMR (Bruker 400 MHz), preferably with 308 pulse angle, inverse gated proton decoupling, a delay time of 5 s and 256 scans. Signal assignment was performed as described by Granata and Argyropoulos

(Magnetic resonance in chemistry, vol. 33, 375-382, 1995).

Preferably one or more of the following lignin preparations is used: Soda mixed straw / Sarkanda grass (P1000); Kraft softwood (Indulin AT); Hydrolysis poplar obtainable from sources as described in the Example.

In a preferred embodiment, the composition according to the present disclosure is a binder for preparing asphalt, i.e. an asphalt binder, preferably comprising

- at most 90, 80, 75, 70, 65 wt.% and/or at least 5, 10, 11, 12, 23,14, 15 wt.% bitumen, preferably at most 60, 50, 40, or 30 wt.% bitumen;
- at least 10, 20, 30, or 25 wt.% and/or at most 90, 85, 80, 75, 60, 55, 50 wt.% lignin preparation, preferably at least 30, 35, 40, 45, 50, 55, 60, 65, 70, 75 wt.% lignin preparation;
- at least 0, 0.1, 0.2, 0.3, 0.4, 0.5, 0.6, 0.7, 0.8, 0.9 or 1 wt.% and/or at most 15, 10, 9, 8, 7, 6, 5, 4, 3, 2, 1 wt.% vegetable oil, preferably at least 1.1, 1.2, 1.3, 1.4, 1.5, 1.6, 1.7, 1.8, 1.9, 2, 2.1, 2.2, 2.3, 2.4, 2.5, 2.5, 2.7, 2.8, 2.9, 3, and/or at most 2.1, 2.2, 2.3, 2.4, 2.5, 2.6, 2.7, 2.8, 2.9, 3.0 3.1, 3.2, 3.3, 3.4, 3.5, 3.6, 3.7, 3.8, 3.9, 4.0 or 1-3, 2-4, 2-3, or 3-5 wt.% vegetable oil. The skilled person will appreciate that the amount of vegetable oil may range depending on the type of asphalt. A more brittle binder mixture may require more vegetable oil to make it smoother.

In another preferred embodiment, the composition according to the present disclosure is an asphalt composition, such as a stone mastic asphalt composition or a porous asphalt (or open graded asphalt) composition, preferably comprising

- at least 0.1, 0.2, 0.3, 0.4, 0.5, 1, 2, 3, 4, 5 wt.% and/or at most 10 or 5 wt.% bitumen, preferably at most 3 wt.% bitumen;
- at least 0.5 or 1 wt.% and/or at most 10, 9, 8, 7, 6, 5, 4, 3, 2, 1 wt.% lignin preparation, preferably at least 3 wt.% lignin preparation;
- at least 0, 0.05, 0.06, 0.07, 0.08, 0.09 or 0.1, 0.2, 0.3, 0.4, 0.5, 0.6, 0.7, 0.8, 0.9 wt.% and/or at most 4, 3, 2, 1.5, 1 wt.% vegetable oil, preferably at least 0.2 wt.% vegetable oil;
- preferably at least 60 or 80 wt.% and/or at most 99, 98, 97, 96, 95, 90 wt.% filler material, wherein the filler material preferably comprises stones, sand, and/or rubble.

Such asphalt composition preferably has a consistency as measured by a penetration of between 10-350 $10^{-1}$ mm at 25°C according to ASTM D5.

In a further aspect, the present disclosure relates to a method of preparing an asphalt composition, preferably an asphalt composition as described above, comprising (a) mixing bitumen with filler material, wherein the filler material preferably comprises stones, sand, and/or rubble; (b) adding lignin preparation and vegetable oil to the mixture obtained in step (a), wherein the lignin preparation and the vegetable oil are added in separate steps or as a premixture, or preferably wherein the lignin preparation and the vegetable oil are added substantially simultaneously (such as within 0.25, 0.5, 1, or 2 hours).

Step (a) is preferably performed at a temperature of 90-180, 100-150 °C, or 110-140, preferably 120-140 °C.

It will be evident that the present disclosure further provides for the use of the lignin preparation as described herein for improving asphalt strength.

In this document and in its claims, the verb "to comprise" and its conjugations is used in its non-limiting sense to mean that items following the word are included, but items not specifically mentioned are not excluded. In addition, reference to an element by the indefinite article "a" or "an" does not exclude the possibility that more than one of the element is present, unless the context clearly requires that there be one and only one of the elements. The indefinite article "a" or "an" thus usually means "at least one".

## EXPERIMENTAL PART

### Lignin types

#### Soda mixed straw / Sarkanda grass (P1000)

Starting material: the mill feedstock is close to 100% wheat straw for soda pulping for production of cellulose pulp in India.

Process description: the mill uses soda pulping in a continuous digester used for the production of bleachable non-wood pulp that goes into printing and writing papers. Lignin is solubilized in black liquor. This lignin was isolated by an LPS process (lignin precipitation process) as described by Abaecherli et al. 2000. Method for preparing alkaline solutions containing aromatic polymers (EP 0970275 B1). Said document relates to a process for the preparation of by acidification precipitable aromatic polymers alkaline solutions, which allows the separation of these polymers in solid form and drying in air at normal pressure and employing temperatures of between 40 ° and 110 ° C without blackening.

Product Description: Protobind™ 1000 (P1000) is a high purity natural polyphenolic material (soda lignin) specially formulated for use as a partial replacement of phenol in phenolic resin industries. This product is now being industrially produced in India in dry powder form using state-of-the -art Swiss technology (EP 0970275 B1). With access to an annual production capacity of more than 10,000 metric tons. Obtainable for example from GreenValue Enterprises LLC.

Pulping is operated by Kuantum Papers and lignin recovery (using GreenValue's technology) is operated by Greencone Environs.

#### Kraft softwood (Indulin AT)

Starting material: Softwood pine

Description of pulp process: the kraft process (also known as kraft pulping or sulfate process) is a process for conversion of wood into wood pulp, which consists of almost pure cellulose fibers, the main component of paper. The kraft process entails treatment of wood chips with a hot mixture of water, sodium hydroxide, and sodium sulfide, known as white liquor, that breaks the bonds that link lignin, hemicellulose, and cellulose. The technology entails both mechanical and chemical steps. The lignin is isolated from black liquor by precipitation and further purified.

Product description: purified kraft softwood lignin: Indulin AT. Obtainable from for example Ingevity Holdings SPRL, Belgium. Production is at Ingevity Chemical.

Hydrolysis straw lignin produced by DONG Energy/Inbicon.

Wheat straw was processed via technology available from Inbicon. This process uses a hydrothermal pretreatment to open up the cellulosic fibres for following hydrolysis and fermentation to produce cellulosic ethanol (Inbicon patent disclosures). The lignin-rich non-fermentable stream was isolated and dried for asphalt application (see e.g. Le, D.M., Frosch Mogensbaek, bitumen compositions comprising lignin, WO 2017/088892 A1). Two hydrolysis straw lignins have been tested. These differ according to different processing steps to produce a regular lignin 1and a more purified lignin 2.

Hydrolysis poplar

Poplar wood was treated by a modified steam explosion process to open up the lignocellulosic fibres for subsequent hydrolysis and fermentation to produce cellulosic ethanol. The lignin-rich non-fermentable stream was isolated and dried for asphalt application.

***Methods of analysis (1)*** (also described by Gosselink et al 2010, Holzforschung 64(1) 2010, 193-200)

Measuring purity and impurity content

Lignin was hydrolyzed by a two-step sulfuric acid hydrolysis starting with 12 M $H_2SO_4$ at 30°C for 1 h followed by 1 M $H_2SO_4$ at 100°C for 3 h. The hydrolysate was neutralized by calcium carbonate until acidic pH as indicated by bromophenol blue. Resulting monosaccharides were separated and quantified by HPAEC-PAD on a Dionex CarboPac PA1 column and precolumn under the following conditions: sodium hydroxide/water gradient at 35°C; flow rate 1 ml min-1. Postcolumn addition of 500 mM NaOH at a flow rate of 0.2 ml min-1 was used for detection. Ash in lignin was determined after complete combustion at 800°C during 4-8 h.

Methods were derived from TAPPI standards.

Measuring molecular weight range

Lignin samples of 1 mg/ml dissolved in 0.5 M NaOH were injected into TSKgel guardcolumn PWxl, Column Size: 6.0 mml.D. x 4cm, Particle Size: 12 um and two serial connected TSKgel GMPWxl, Column Size: 7.8 mml.D. x 30cm, Particle Size: 13 um. Samples were eluted with the same solvent. Conditions: flow 1 ml min-1, column temperature 25°C, and detection at 280 nm. Standards for calibration of the molar mass distribution: sodiumpolystyrene sulfonates (Mw range: 891 to 976 000 Da) and phenol.

Measuring softening temperature

20 mg of dried lignin was put in hermetically closed stainless steel cups. In a DSC Pyris Perkin Elmer, the samples were heated from -40°C to 190°C with 10°C/min. After annealing with 100°C/min to -40°C, the samples were heated to 190°C with 10°C/min. The Tg was measured from the second heating thermogram.

Measuring phenolic and aliphatic hydroxyl groups

In a 1-ml vial, 30 mg of lignin was mixed with 100 ml N,N-Dimethylformamide (DMF)/pyridine (1:1 v/v) and 100 ml internal standard solution containing 15 mg ml-1 cyclohexanol (internal standard) and 2.5 mg ml-1 chromium(III) acetylacetonate in pyridine. This suspension was stirred for 4-16 h at room temperature. Derivatization (100 ml) reagent (2-chloro-4,4,5,5-tetramethyl-1,3,2-dioxaphopholane) was mixed with 400 ml of CDCl3 prior to addition to the lignin suspension. After mixing, the mixture was analyzed by NMR (Bruker 400 MHz), with 308 pulse angle, inverse gated proton decoupling, a delay time of 5 s and 256 scans. Signal assignment was performed as described by Granata and Argyropoulos (J. Agric. Food Chem. 43:1538-1544, 1995; Magnetic resonance in chemistry, vol. 33, 375-382, 1995).

Measuring dry strength and wet strength

Dry strength and wet strength were measured as described in Hossain, M. I., and Tarefder, R. A., (2013), Effects of Moisture in Asphalt Concrete, Basic Research Journal of Engineering Innovation, 1(1), pp 16-25.

***Methods of analysis (2)***

Measuring the acoustic properties of road surfaces

For the measurement of the rolling noise level of vehicles on various road surface types, two measurement methods have been developed within the International Organization for Standardization (ISO). This concerns the:

- Close-Proximity (CPX) method (ISO 11819-2) [1]
- Statistical Pass-By (SPB) method (ISO 11819-1) [2]

[1] The CPX method consists of a system where the noise of a set of tires is measured at a short distance when it rolls over the road surface. This measurement with a 'noise measurement trailer' provides insight into the course of the noise level over the entire section length.
The measurements are carried out with two different standard tires. The measuring tire P1 is representative of the noise of light motor vehicles. The result is displayed as CPXP. The second tire is measuring tire H1. The result is displayed as CPXH and is considered to be representative of the noise of heavy motor vehicles.

[2] In the SPB measurement, the maximum A-weighted noise level and vehicle speed are recorded for individual vehicle passages. The noise level is measured at a fixed distance from the middle of the driving lane to be measured. The measurement is carried out for at least 100 light motor vehicles and, if possible, 50 heavy motor vehicles. The reliability value at which the SPB result is considered to be reliable must be less than or equal to 0.3 dB (A) for light motor vehicles. For heavy motor vehicles this limit value is 0.8 dB (A).

Both methods can be used to determine the acoustic properties of road surfaces. In the present disclosure, both methods were used and the results averaged.

Measuring rolling resistance

The rolling resistance is the mechanical energy that is converted into heat when a tire rolls over a certain distance on the road surface. The rolling resistance coefficient is defined as:

$$RRC = F_{rr} / F_z,$$

wherein RRC is the rolling resistance coefficient [kg/t] , $F_{rr}$ is the force that is necessary to get the vehicle moving in the desired direction [N], and $F_z$ is gravity (N).
In the above formula, the rolling resistance coefficient (RRC) is expressed as a dimensionless unit. Because the RRC is usually between 0.5% and 1.5%, writing it down in whole numbers leads to four zeros after the comma, which can lead to misunderstandings about the order of magnitude. In the literature, the RRC is therefore often given in percent, or kg / ton.
The rolling resistance measurements were carried out with the rolling resistance trailer of the TU Gdansk from Poland.

Measuring brake deceleration

This method describes the determination of the braking deceleration value for a homogeneous road section by means of a brake test. In this method, a measuring vehicle is used on a dry road surface with completely blocked wheels in a series of brakes from 80 to 0 km / h. The measuring system consists of a measuring vehicle in which is a braking deceleration meter is mounted which records and stores the braking deceleration during braking. After the measuring vehicle has been brought to a measuring speed of 80 km / h, the brake pedal is pressed fully (emergency stop, no ABS). The brake pedal will not be released before the vehicle has completely stopped.
The requirements for the measuring vehicle are:

- mass 1450 ± 150 kg;
- the brakes must be fully blocked immediately when the brakes are pressed completely and fast;
- the brake deceleration meter must be adequately fixed in horizontal position in the measuring vehicle.

The average braking deceleration between the moment of braking and the complete stop of the vehicle can then be calculated.

### *Characteristics of the different lignin preparation types*

| LIGNIN PREP. TYPE | Purity (lignin content wt%) | Molecular weight (g/mol) | Indicative softening temperature (DSC / °C) | Type and percentage of impurities (wt%) | | | Functional groups (mmol/g) |
|---|---|---|---|---|---|---|---|
| | | | | Carbohydrates | Proteins | Ash | |
| Soda mixed straw / Sarkanda grass (P1000) | 86 | 2400 | 94 | 2.9 | 4.9 | 1.0 | 5.7 |
| Kraft softwood (Indulin AT) | 92 | 3500 | 100 | 1.7 | <1 | 2.1 | 6.6 |
| Hydrolysis straw 1) | 59 | 6800[1] | 100 | 20.2 | 7.1 | 14.5 | 4.3 |
| Hydrolysis straw2) | 68 | 4600[1] | 100 | 19.0 | 9.0 | 10.8 | 3.1 |
| Hydrolysis poplar | 75 | 13000[1] | ND | 16.3 | <1 | 2.3 | ND |
| [1] = Lignin partly soluble in SEC eluent | | | | | | | |

### *Method of preparing asphalt binder*

For each of the different lignin preparation types, a binder composition was prepared which was tested in Stone Mastic asphalt and in Porous asphalt. Lignin preparation and bitumen were applied in equal amounts in the binder composition. In the case of stone mastic asphalt binder, 1.5 wt.% of lynpave oil (boiled linseed oil), based on total asphalt binder, was applied to allow processing of the stone mastic bio-asphalt at 130 °C.

For preparing the stone mastic asphalt compositions, first a hot mixture of stones, sand, filler, and a preparation of bitumen (both at 130°C ) was prepared and mixed, after that the lignin preparation in powder form and the vegetable oil were simultaneously added (at ambient temperature). In this way, a bitumen layer covers the stones, and better mixing with the lignin preparation is achieved. The ratio between stones, sand and filler was chosen such as to provide for a dense SMA premixture. The total mixture was mixed in a drum. The asphalt composition was then densified in a gyrator to the desired test surfaces.

For preparing the porous asphalt composition, first a hot mixture of stones (and sand, filler) and a preparation of bitumen (both at 130°C ) was prepared. The ratio between stones, sand and filler was chosen such as to provide for a water draining porous asphalt premixture. The bitumen preparation, together with a lignin preparation in powder form were added to the hot stones and mixed in a twin shaft Pugmill. It was found that vegetable oil is not required for porous asphalt compositions. Subsequently, the asphalt composition was densified in a gyrator to the desired test surfaces.

### *Results of binder compositions in Stone Mastic asphalt (1)*

| Lignin type name | Bitumen penetration range + percentages by weight with respect to binder composition | Lynpave oil + percentage in binder composition | Dry Strength (MPa) | Wet Strength (MPa) | Ratio ITRS (%) |
|---|---|---|---|---|---|
| Soda mixed straw / Sarkanda grass (P1000) | 40/60 pen grade 47,2 (w/w) % bitumen 51.3 (w/w) % Lignin | 1.5 (w/w) % | 1.78 | 1.51 | 85 |
| Kraft softwood (Indulin AT) | 40/60 pen grade 47,2 (w/w) % bitumen 51.3 (w/w) % Lignin | 1.5 (w/w) % | 1.40 | 1.22 | 87 |
| Hydrolysis straw 1 | 40/60 pen grade 47,2 (w/w) % bitumen 51.3 (w/w) % Lignin | 1.5 (w/w) % | 1.31 | 1.13 | 86 |
| Hydrolysis straw 2 | 40/60 pen grade 47,2 (w/w) % bitumen 51.3 (w/w) % Lignin | 1.5 (w/w) % | 1.70 | 1.41 | 83 |
| Hydrolysis poplar | 40/60 pen grade 47,2 (w/w) % bitumen 51.3 (w/w) % Lignin | 1.5 (w/w) % | 1.26 | 0.48 | 38 |
| Bitumen (control) | 70/100 pen grade 100 (w/w) % | 0 (w/w) % | 1.27 | 1.21 | 95 |

**Results of binder compositions in Stone Mastic asphalt (2)**

| Lignin type name | Acoustic properties (noise reduction) | Rolling resistance | Brake decelaration |
|---|---|---|---|
| Kraft softwood (Indulin AT)* | 4,2 dB(A) less than reference value | 3.4% lower than reference value | 5.8-6.2 m/s$^2$ |
| Bitumen (control) | set as reference value | set as reference value | 5.2 m/s$^2$ |
| *SMA asphalt composition with 72.6% stones; 14.5% sand; 5.8% filler; 4.8% bitumen; 2.0% lignin preparation; 0.2% lynpave oil, all in weight percentages. | | | |

**Results of binder compositions in Porous asphalt**

| Lignin type name | Bitumen penetration range + percentages by weight with respect to binder composition | Lynpave oil + percentage in binder composition | Dry Strength (MPa) | Wet Strength (MPa) | Ratio ITRS (%) |
|---|---|---|---|---|---|
| Soda mixed straw / Sarkanda grass (P1000) | 70/100 pen grade 58 (w/w) % bitumen 42 (w/w) % Lignin | 0 (w/w) % | 1.34 | 1.09 | 81 |
| Kraft softwood (Indulin AT) | 70/100 pen grade 58 (w/w) % bitumen 42 (w/w) % Lignin | 0 (w/w) % | 1.06 | 0.94 | 89 |

(continued)

| Lignin type name | Bitumen penetration range + percentages by weight with respect to binder composition | Lynpave oil + percentage in binder composition | Dry Strength (MPa) | Wet Strength (MPa) | Ratio ITRS (%) |
|---|---|---|---|---|---|
| Hydrolysis straw 1 | 70/100 pen grade 58 (w/w) % bitumen 42 (w/w) % Lignin | 0 (w/w) % | 0.73 | 0.45 | 62 |
| Hydrolysis straw 2 | 70/100 pen grade 58 (w/w) % bitumen 42 (w/w) % Lignin | 0 (w/w) % | 0.92 | 0.72 | 78 |
| Hydrolysis poplar | 70/100 pen grade 58 (w/w) % bitumen 42 (w/w) % Lignin | 0 (w/w) % | 0.62 | 0.34 | 54 |
| Bitumen (control) | 70/100 pen grade 100 (w/w) % | 0 (w/w) % | 1.06 | 0.85 | 80 |

**Claims**

1. Composition comprising

   - bitumen;
   - optionally vegetable oil or derivative thereof;
   - lignin preparation, wherein the lignin preparation is **characterized by**

      - a lignin purity of 60-100 wt.% with respect to the weight of the lignin preparation; and
      - a lignin average molecular weight of 1000-5000 g/mol.

   wherein the composition is

      a) a binder composition for preparing asphalt comprising at most 90 wt.% bitumen, at least 10 wt.% lignin preparation, and optionally at least 0.1 wt.% vegetable oil, with respect to the total weight of the binder composition; or
      b) an asphalt composition comprising at most 10 wt.% bitumen, at least 0.5 wt.% lignin preparation, at least 60 wt.% filler material, and optionally at least 0.05 wt.% vegetable oil, with respect to the total weight of the asphalt composition.

2. Composition according to claim 1, wherein the lignin preparation is further **characterized by**

   - a softening temperature of at least 95 °C, preferably at least 97 °C;
   - a carbohydrate content of at most 20 wt.%, preferably at most 10 wt.%, with respect to the weight of the lignin preparation;
   - a protein content of at most 10 wt.%, preferably at most 5 wt.%, with respect to the weight of the lignin preparation;
   - an ash content of at most 12 wt.%, preferably at most 5 wt. %, with respect to the weight of the lignin preparation; and/or
   - a phenolic hydroxyl group content of at least 2 mmol per gram of the lignin preparation.

3. Composition according to any one of the previous claims, wherein the vegetable oil is chosen from linseed oil, soybean oil, sunflower oil, and safflower oil; and/or wherein the vegetable oil has a dynamic viscosity of 0.1-1600 Pa.s at 20°C, preferably 0.1-100 Pa.s at 20°C.

4. Composition according to any one of the previous claims, wherein the bitumen is selected from virgin bitumen, recycled bitumen, or mixtures thereof.

5. Composition according to any one of the previous claims, wherein the composition is a binder for preparing asphalt comprising

- at least 10 wt.% and/or at most 75 wt.% bitumen, preferably at most 60 wt.% bitumen, with respect to the total weight of the composition;
- at least 25 wt.% and/or at most 80 wt.% lignin preparation, preferably at least 40 wt.% lignin preparation, with respect to the total weight of the composition; and/or
- at least 0.5 wt.% and/or at most 10 wt.% vegetable oil, preferably at least 1 wt.% vegetable oil, with respect to the total weight of the composition.

6. Composition according to any one of the previous claims, wherein the composition is an asphalt composition comprising

- at least 0.5 wt.% and/or at most 5 wt.% bitumen, preferably at most 3 wt.% bitumen, with respect to the total weight of the composition;
- at least 1 wt.% and/or at most 10 wt.% lignin preparation, preferably at least 3 wt.% lignin preparation, with respect to the total weight of the composition;
- at least 0.1 wt.% and/or at most 2 wt.% vegetable oil, preferably at least 0.2 wt.% vegetable oil, with respect to the total weight of the composition; and/or
- preferably at least 80 wt.% and/or at most 97 wt.% filler material, with respect to the total weight of the composition, wherein the filler material preferably comprises stones, sand, and/or rubble.

7. Composition according to any one of the previous claims, wherein the composition is an asphalt composition having a consistency as measured by a penetration of between 10-350 $10^{-1}$ mm at 25°C according to ASTM D5.

8. Paving comprising the composition according to any one of previous claims.

9. Roofing comprising the composition according to any one of the previous claims.

10. Method of preparing an asphalt composition according to claim 1, comprising

(a) mixing bitumen with filler material, wherein the filler material preferably comprises stones, sand, and/or rubble;
(b) adding lignin preparation and vegetable oil to the mixture obtained in step (a), wherein the lignin preparation and the vegetable oil are added in separate steps or as a premixture, or preferably wherein the lignin preparation and the vegetable oil are added substantially simultaneously.

11. Method according to claim 10, wherein step (a) is performed at a temperature of 100-150°C, preferably 120-140 °C.

12. Use of a lignin preparation for improving asphalt strength, wherein the lignin preparation is **characterized by**

- a lignin purity of 60-100 wt.% with respect to the weight of the lignin preparation; and
- a lignin average molecular weight of 1000-5000 g/mol.

13. Use according to claim 12, wherein the lignin preparation is as defined in claim 2.


**Patentansprüche**

1. Zusammensetzung umfassend

- Bitumen;
- gegebenenfalls Pflanzenöl oder ein Derivat davon;
- eine Ligninzubereitung, wobei die Ligninzubereitung **gekennzeichnet ist durch**

  - eine Reinheit des Lignins von 60-100 Gew.-%, bezogen auf das Gewicht der Ligninzubereitung; und
  - ein durchschnittliches Molekulargewicht des Lignins von 1000-5000 g/mol,

worin die Zusammensetzung folgendes ist

a) eine Bindemittelzusammensetzung zur Herstellung von Asphalt, umfassend höchstens 90 Gew.-% Bitumen, mindestens 10 Gew.-% Ligninzubereitung und gegebenenfalls mindestens 0,1 Gew.-% Pflanzenöl, bezogen auf das Gesamtgewicht der Bindemittelzusammensetzung; oder

b) eine Asphaltzusammensetzung, umfassend höchstens 10 Gew.-% Bitumen, mindestens 0,5 Gew.-% Ligninzubereitung, mindestens 60 Gew.-% Füllmaterial und gegebenenfalls mindestens 0,05 Gew.-% Pflanzenöl, bezogen auf das Gesamtgewicht der Asphaltzusammensetzung.

2. Zusammensetzung nach Anspruch 1, wobei die Ligninzubereitung ferner **gekennzeichnet ist durch**

- eine Erweichungstemperatur von mindestens 95°C, vorzugsweise mindestens 97°C;
- einen Kohlenhydratgehalt von höchstens 20 Gew.-%, vorzugsweise höchstens 10 Gew.-%, bezogen auf das Gewicht der Ligninzubereitung;
- einen Proteingehalt von höchstens 10 Gew.-%, vorzugsweise höchstens 5 Gew.-%, bezogen auf das Gewicht der Ligninzubereitung;
- einen Aschegehalt von höchstens 12 Gew.-%, vorzugsweise höchstens 5 Gew.-%, bezogen auf das Gewicht der Ligninzubereitung; und/oder
- einen Gehalt an phenolischen Hydroxylgruppen von mindestens 2 mmol pro Gramm der Ligninzubereitung.

3. Zusammensetzung nach einem der vorhergehenden Ansprüche, wobei das Pflanzenöl ausgewählt ist aus Leinsamenöl, Sojabohnenöl, Sonnenblumenöl und Distelöl; und/oder wobei das Pflanzenöl eine dynamische Viskosität von 0,1-1600 Pa.s bei 20°C, vorzugsweise 0,1-100 Pa.s bei 20°C aufweist.

4. Zusammensetzung nach einem der vorhergehenden Ansprüche, wobei das Bitumen ausgewählt ist aus jungfräulichem Bitumen, recyceltem Bitumen oder Mischungen davon.

5. Zusammensetzung nach einem der vorhergehenden Ansprüche, wobei die Zusammensetzung ein Bindemittel zur Herstellung von Asphalt ist, umfassend

- mindestens 10 Gew.-% und/oder höchstens 75 Gew.-% Bitumen, vorzugsweise höchstens 60 Gew.-% Bitumen, bezogen auf das Gesamtgewicht der Zusammensetzung;
- mindestens 25 Gew.-% und/oder höchstens 80 Gew.-% Ligninzubereitung, vorzugsweise mindestens 40 Gew.-% Ligninzubereitung, bezogen auf das Gesamtgewicht der Zusammensetzung; und/oder
- mindestens 0,5 Gew.-% und/oder höchstens 10 Gew.-% Pflanzenöl, vorzugsweise mindestens 1 Gew.-% Pflanzenöl, bezogen auf das Gesamtgewicht der Zusammensetzung.

6. Zusammensetzung nach einem der vorhergehenden Ansprüche, wobei die Zusammensetzung eine Asphaltzusammensetzung ist, umfassend

- mindestens 0,5 Gew.-% und/oder höchstens 5 Gew.-% Bitumen, vorzugsweise höchstens 3 Gew.-% Bitumen, bezogen auf das Gesamtgewicht der Zusammensetzung;
- mindestens 1 Gew.-% und/oder höchstens 10 Gew.-% Ligninzubereitung, vorzugsweise mindestens 3 Gew.-% Ligninzubereitung, bezogen auf das Gesamtgewicht der Zusammensetzung;
- mindestens 0,1 Gew.-% und/oder höchstens 2 Gew.-% Pflanzenöl, vorzugsweise mindestens 0,2 Gew.-% Pflanzenöl, bezogen auf das Gesamtgewicht der Zusammensetzung; und/oder
- vorzugsweise mindestens 80 Gew.-% und/oder höchstens 97 Gew.-% Füllmaterial, bezogen auf das Gesamtgewicht der Zusammensetzung, wobei das Füllmaterial vorzugsweise Steine, Sand, und/oder Schutt umfasst.

7. Zusammensetzung nach einem der vorhergehenden Ansprüche, wobei die Zusammensetzung eine Asphaltzusammensetzung mit einer Konsistenz, gemessen durch Penetration, zwischen 10-350 $10^{-1}$ mm bei 25°C gemäß ASTM D5 ist.

8. Pflaster, umfassend die Zusammensetzung nach einem der vorhergehenden Ansprüche.

9. Bedachung, umfassend die Zusammensetzung nach einem der vorhergehenden Ansprüche.

10. Verfahren zur Herstellung einer Asphaltzusammensetzung nach Anspruch 1, umfassend

(a) das Mischen von Bitumen mit Füllmaterial, wobei das Füllmaterial vorzugsweise Steine, Sand und/oder Schutt umfasst;

(b) die Zugabe von Ligninzubereitung und Pflanzenöl zu der in Schritt (a) erhaltenen Mischung, wobei die Ligninzubereitung und das Pflanzenöl in getrennten Schritten oder als Vormischung zugegeben werden, oder vorzugsweise wobei die Ligninzubereitung und das Pflanzenöl im Wesentlichen gleichzeitig zugegeben werden.

**11.** Verfahren nach Anspruch 10, wobei Schritt (a) bei einer Temperatur von 100-150°C, vorzugsweise 120-140°C durchgeführt wird.

**12.** Verwendung einer Ligninzubereitung zur Verbesserung der Asphaltfestigkeit, wobei die Ligninzubereitung **gekennzeichnet ist durch**

- eine Reinheit des Lignins von 60-100 Gew.-%, bezogen auf das Gewicht der Ligninzubereitung; und
- ein durchschnittliches Molekulargewicht des Lignins von 1000-5000 g/mol.

**13.** Verwendung nach Anspruch 12, wobei die Ligninzubereitung wie in Anspruch 2 definiert ist.

**Revendications**

**1.** Composition comprenant

- du bitume ;
- éventuellement de l'huile végétale ou un dérivé de celle-ci ;
- une préparation de lignine, dans laquelle la préparation de lignine est **caractérisée par**

- une pureté de lignine de 60 à 100% en poids par rapport au poids de la préparation de lignine ; et
- un poids moléculaire moyen de la lignine compris entre 1000 et 5000 g/mol,

dans laquelle la composition est

a) une composition de liant pour la préparation d'asphalte, comprenant au maximum 90% en poids de bitume, au moins 10% en poids de préparation de lignine, et éventuellement au moins 0,1% en poids d'huile végétale, par rapport au poids total de la composition de liant ; ou
b) une composition d'asphalte comprenant au plus 10% en poids de bitume, au moins 0,5% en poids de préparation de lignine, au moins 60% en poids de matériau de charge et, éventuellement, au moins 0,05% en poids d'huile végétale, par rapport au poids total de la composition d'asphalte.

**2.** Composition selon la revendication 1, dans laquelle la préparation de lignine est en outre **caractérisée par**

- une température de ramollissement d'au moins 95°C, de préférence d'au moins 97°C ;
- une teneur en hydrates de carbone d'au plus 20% en poids, de préférence d'au plus 10% en poids, par rapport au poids de la préparation de lignine ;
- une teneur en protéines d'au plus 10% en poids, de préférence d'au plus 5% en poids, par rapport au poids de la préparation de lignine ;
- une teneur en cendres d'au plus 12% en poids, de préférence d'au plus 5% en poids, par rapport au poids de la préparation de lignine ; et/ou
- une teneur en groupes hydroxyles phénoliques d'au moins 2 mmol par gramme de la préparation de lignine.

**3.** Composition selon l'une quelconque des revendications précédentes, dans laquelle l'huile végétale est choisie parmi l'huile de lin, l'huile de soja, l'huile de tournesol et l'huile de carthame ; et/ou dans laquelle l'huile végétale a une viscosité dynamique de 0,1 à 1600 Pa.s à 20°C, de préférence 0,1 à 100 Pa.s à 20°C.

**4.** Composition selon l'une quelconque des revendications précédentes, dans laquelle le bitume est choisi parmi les bitumes vierges, les bitumes recyclés ou des mélanges de ceux-ci.

**5.** Composition selon l'une quelconque des revendications précédentes, dans laquelle la composition est un liant pour la préparation d'asphalte, comprenant

- au moins 10% en poids et/ou au plus 75% en poids de bitume, de préférence au plus 60% en poids de bitume, par rapport au poids total de la composition ;
- au moins 25% en poids et/ou au plus 80% en poids de préparation de lignine, de préférence au moins 40% en poids de préparation de lignine, par rapport au poids total de la composition par rapport au poids total de la composition ; et/ou
- au moins 0,5% en poids et/ou au plus 10% en poids d'huile végétale, de préférence au moins 1% en poids d'huile végétale, par rapport au poids total de la composition.

6. Composition selon l'une quelconque des revendications précédentes, dans laquelle la composition est une composition d'asphalte comprenant

- au moins 0,5% en poids et/ou au plus 5% en poids de bitume, de préférence au plus 3% en poids de bitume, par rapport au poids total de la composition ;
- au moins 1% en poids et/ou au plus 10% en poids de préparation de lignine, de préférence au moins 3% en poids de préparation de lignine, par rapport au poids total de la composition ;
- au moins 0,1% en poids et/ou au plus 2% en poids d'huile végétale, de préférence au moins 0,2% en poids d'huile végétale, par rapport au poids total de la composition végétale ; et/ou
- de préférence au moins 80% en poids et/ou au plus 97% en poids de matériau de charge, par rapport au poids total de la composition, dans laquelle la matière de comprend de préférence des pierres, de sable et/ou des gravats.

7. Composition selon l'une quelconque des revendications précédentes, dans laquelle la composition est une composition d'asphalte ayant une consistance telle que mesurée par une pénétration comprise entre 10 et 350.10$^{-1}$ mm à 25°C selon la norme ASTM D5.

8. Revêtement comprenant la composition selon l'une quelconque des revendications précédentes.

9. Couverture comprenant la composition selon l'une quelconque des revendications précédentes.

10. Procédé de préparation d'une composition d'asphalte selon la revendication 1, comprenant les étapes de

(a) mélanger du bitume avec un matériau de charge, dans lequel le matériau de charge comprend de préférence des pierres, du sable et/ou des gravats ;
(b) ajouter une préparation de lignine et de l'huile végétale au mélange obtenu à l'étape (a), dans lequel la préparation de lignine et l'huile végétale sont ajoutées à des étapes séparées ou en tant que prémélange, ou, de préférence, dans lequel la préparation de lignine et l'huile végétale sont ajoutées sensiblement simultanément.

11. Procédé selon la revendication 10, dans lequel l'étape (a) est réalisée à une température de 100 à 150°C, de préférence de 120 à 140°C.

12. Utilisation d'une préparation de lignine pour améliorer la résistance d'asphalte, dans laquelle la préparation de lignine est **caractérisée par**

- une pureté de lignine de 60 à 100% en poids par rapport au poids de la préparation de lignine ; et
- un poids moléculaire moyen de la lignine compris entre 1000 et 5000 g/mol.

13. Utilisation selon la revendication 12, dans laquelle la préparation de lignine est telle que définie dans la revendication 2.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 0970275 B1

- WO 2017088892 A1

**Non-patent literature cited in the description**

- **GALLAGHER et al.** *Am. Oil. Chem. Soc.,* 1977, vol. 54, 68-70
- *Magnetic resonance in chemistry,* 1995, vol. 33, 375-382

- *J. Agric. Food Chem.,* 1995, vol. 43, 1538-1544
- **HOSSAIN, M. I. ; TAREFDER, R. A.** Effects of Moisture in Asphalt Concrete. *Basic Research Journal of Engineering Innovation,* 2013, vol. 1 (1), 16-25